# EUROPEAN PATENT APPLICATION

(11) **EP 4 470 668 A1**
(43) Date of publication of application: **04.12.2024**
(21) Application number: 23747301.2
(22) Date of filing: 25.01.2023
(51) Int. Cl.: B01J 37/30, B01J 37/08, B01J 37/02, B01J 29/74, B01J 23/02, B01J 23/44, B01D 53/86, B01J 29/70

(54) **CATALYST FOR METHANE OXIDATION REACTION, METHOD FOR PREPARING SAME, AND METHANE OXIDATION METHOD USING SAME**

(30) Priority: 28.01.2022 KR 20220013133; 11.02.2022 KR 20220017943
(71) Applicant: Korea Research Institute of Chemical Technology, Daejeon 34114 (KR)
(72) Inventor: CHAE, Ho Jeong, Daejeon 34114 (KR); KIM, Young Min, Daejeon 34114 (KR); PARK, Sung Hyun, Daejeon 34114 (KR)
(74) Representative: Isarpatent
(86) International application number: PCT/KR2023/001115
(87) International publication number: WO 2023/146260

(57) **Abstract**

The present invention relates to a catalyst for a methane oxidation reaction, a method for preparing same, and a methane oxidation method using same and, more specifically, to: a catalyst for a methane oxidation reaction, which, by containing a specific metal that is relatively inexpensive compared to platinum-group precious metals and at the same time, is capable of improving the methane oxidation activity of platinum-group precious metals, can stably maintain excellent catalytic activity for a long period of time even under high-temperature conditions; a method for preparing same; and a methane oxidation method using same.

## Description

### Technical Field

The present disclosure relates to a catalyst for methane oxidation reaction, a method of preparing the same catalyst, and a method of oxidating methane using the same catalyst. More specifically, the present disclosure relates to a catalyst for methane oxidation reaction that can efficiently oxidate methane for a long time with stable and high catalytic activity thereof, a method of preparing the same catalyst, and a method of oxidating methane using the same catalyst.

### Background Art

Oil, which is widely used as an energy source around the world, is gradually being depleted, and the Middle East, the largest oil-producing region, is experiencing political instability. Thus, high oil prices are expected to continue in the future. Meanwhile, in comparison with oil, natural gas, whose main ingredient is methane (CH₄), is abundant since natural gas has reserves of about 40%, and natural gas is a cheap and abundant energy source buried all over the world. This natural gas is currently widely used as a fuel for combined heat and power plants and public transportation.

However, methane emitted from incomplete combustion of natural gas is a major cause of global warming. Because methane has a long lifespan, methane can have a greater negative impact on global warming than carbon dioxide.

Methane has very stable C-H bonds among VOCs, so methane is difficult to completely oxidate at low temperatures of 500°C and lower. Accordingly, there is a demand for technology to remove methane by inputting low energy. Among them, the oxidation reaction of methane using a catalyst is receiving the most attention, and much research is being conducted.

As a catalyst applied to this methane oxidation reaction, mainly used catalysts are with carriers (for example, Al₂O₃, ZrO₂, TiO₂, and SiO₂), the carriers having platinum group noble metals (for example, Pt, Pd, and Au) thereon and exhibiting stable physical and chemical properties at high temperatures (Patent Documents 0001 to 0003).

Patent Document 1 discloses an exhaust gas oxidation catalyst containing metal oxide and platinum disposed on a monolithic substrate. However, the content of platinum was too high, making the use of the catalyst less economical, and there was a limitation in that the catalyst could not help induce the direct oxidation of methane. Patent Document 2 discloses a mesoporous transition metal complex oxide palladium (Pd)-supported, but the problem is that the manufacturing process of mesoporous transition metal complex oxide is very complicated. Additionally, Patent Document 3 discloses a catalyst containing cobalt oxide and nickel oxide, but there was a problem with low catalytic activity at low temperatures of 400°C and lower. These conventional technologies were developed to serve as catalysts capable of oxidating hydrocarbons or carbon monoxide but the technologies had limitations in not being able to characterize methane as a reactant for an oxidation reaction.

On the other hand, the activity of catalysts having platinum group noble metals supported thereon is reduced even by a small amount of water vapor present in the incoming reactants. When the activity of catalysts decreased, the maintenance time of the methane oxidation reaction was shortened, the catalyst replacement cycle became more frequent, and thus a problem occurred that methane oxidation activity could not be guaranteed for the desired time.

A common method to solve this problem of shortened catalyst lifespan is to add more methane oxidation catalysts than necessary to extend the reaction time as long as the reaction activity is maintained. However, considering that the main materials of the methane oxidation catalysts are precious metals such as platinum and palladium, there was a problem that costs increased when more catalysts were added than necessary.

### [Documents of Related Art]

### [Patent Documents]

(Patent document 1) Korean Patent Registration No. 10-1909303 (Publication date: 2013.12.05.)
(Patent document 2) Korean Patent Registration No. 10-2016-0112179 (Publication date: 2016.09.28.)
(Patent document 3) Korean Patent Registration No. 10-1598390 (Publication date: 2015.12.30.)

### Disclosure

### Technical Problem

To solve the described problems, the present disclosure is to provide a catalyst for methane oxidation reaction that can stably maintain excellent catalytic activity for a long time even at high temperatures by having a specific metal supported thereon, and a method of preparing the same. Herein, the specific metal is relatively inexpensive compared to platinum group noble metals and can improve the methane oxidation activity of platinum group noble metals.

Additionally, the present disclosure is to provide a method of oxidating methane that can efficiently oxidate methane even at high temperatures using the catalyst for the methane oxidation reaction.

### Technical Solution

To achieve the aims, in an embodiment of the present disclosure, provided is a catalyst including palladium and one or more metals selected from the group consisting of potassium, magnesium, and calcium, being supported on a zeolite-type molecular sieve.

In one preferred embodiment of the present disclosure, the one or more metals selected from the group consisting of potassium, magnesium, and calcium supported and included in the catalyst for methane oxidation reaction may be contained as a whole in an amount of 0.01 wt% to 10.0 wt% based on the total weight of the catalyst.

In another preferred embodiment of the present disclosure, the palladium supported and included in the catalyst for methane oxidation reaction may be contained as a whole in an amount of 0.1 wt% to 10.0 wt% based on the total weight of the catalyst.

In yet another preferred embodiment of the present disclosure, the one or more metals selected from the group consisting of potassium, magnesium, and calcium supported and included in the catalyst for methane oxidation reaction may be contained as a whole in an amount of 0.01 wt% to 10.0 wt% based on the total weight of the catalyst.

In yet another preferred embodiment of the present disclosure, the zeolite-type molecular sieve may be selected from the group consisting of SSZ-13, mordenite, ZSM-5, and SAPO-34.

In yet another preferred embodiment of the present disclosure, provided is a method of preparing a catalyst for methane oxidation reaction, the method including:
(a) causing one or more metals selected from the group consisting of potassium, magnesium, and calcium to be supported on a zeolite-type molecular sieve through ion exchange;
(b) washing, drying, and calcining the resulting product of the step (a);
(c) causing palladium to be supported on the resulting sintered product of the step (b) through wet impregnation; and
(d) drying and calcining the resulting product of the step (c) .

In yet another preferred embodiment of the present disclosure, the one or more metals selected from the group consisting of potassium, magnesium, and calcium supported and included in the catalyst for methane oxidation reaction may be contained as a whole in an amount of 0.01 wt% to 10.0 wt% based on the total weight of the catalyst.

In yet another preferred embodiment of the present disclosure, the palladium supported and included in the catalyst for methane oxidation reaction may be contained as a whole in an amount of 0.1 wt% to 10.0 wt% based on the total weight of the catalyst.

In yet another preferred embodiment of the present disclosure, the zeolite-type molecular sieve may be selected from the group consisting of SSZ-13, mordenite, ZSM-5, and SAPO-34.

In yet another preferred embodiment of the present disclosure, the calcining of the step (b) may be performed at a temperature in a range of 200°C to 1000°C.

In yet another preferred embodiment of the present disclosure, the calcining of the step (d) may be performed at a temperature in a range of 300°C to 600°C.

In yet another preferred embodiment of the present disclosure, provided is a method of oxidating methane, the method causing complete oxidation of methane in the presence of the catalyst for the methane oxidation reaction.

In yet another preferred embodiment of the present disclosure, the oxidation may be performed at a temperature in a range of 300°C to 600°C.

In yet another preferred embodiment of the present disclosure, methane may be introduced into the methane oxidation reactor in the form of a gas mixture including the methane, oxygen, and water vapor.

### Advantageous Effects

The catalyst for methane oxidation reaction according to the present disclosure can be prepared economically at low cost by adding an inexpensive specific metal as a co-catalyst in a zeolite-type molecular sieve and as a result, lowering the content of expensive palladium, and at the same time, the catalyst can stably maintain excellent catalytic activity for a long time even at high temperatures where a large amount of water vapor is present. Thus, the catalyst for methane oxidation reaction can be usefully applied in various processes that require complete oxidation of methane.

### Description of Drawings

FIG. 1 is a process flow chart of a method for preparing a catalyst for methane oxidation reaction according to an embodiment of the present disclosure;
FIG. 2 is a graph showing the results of measuring the methane conversion rate by temperature of a catalyst for methane oxidation reaction according to an embodiment of the present disclosure; and
FIG. 3 is a graph showing the results of measuring the long-term stability of a catalyst for methane oxidation reaction according to an embodiment of the present disclosure.

### Mode for Disclosure

The advantages and features of the present disclosure and methods for achieving the advantages and features will become clear by referring to the embodiments described in detail below along with the accompanying drawings. However, the present disclosure is not limited to the embodiments disclosed below and will be implemented in various forms. These embodiments are provided solely to ensure that the present disclosure is completely disclosed and to fully inform those skilled in the art of the present disclosure of the scope of the disclosure. The present disclosure is defined only by the scope of the claims.

In describing the present disclosure, if it is determined that a detailed description of related known technologies may unnecessarily obscure the gist of the present disclosure, the detailed description will be omitted.

When 'includes', 'has', and `consists of' mentioned in this specification are used, other parts may be added unless `only' is used. When a component is expressed in the singular, the plural is included unless specifically stated otherwise.

Also, in the case of a description of a positional relationship, for example, if the positional relationship between two parts is described as `on top', `on the top', `on the bottom', and `next to', unless the descriptions like `right away' or 'directly' are used, one or more other parts may be located between the two parts. In the case of a description of a temporal relationship, for example, if a temporal relationship is described as 'after', 'after', `after', and 'before', unless the descriptions like 'immediately' or 'directly' are used, nonconsecutive cases may also be included.

Each feature of the various embodiments of the present disclosure can be partially or fully combined or combined with each other, and various technological interconnections and drives are possible. Each embodiment may be implemented independently of each other or may be implemented together in a related relationship.

One aspect of the present disclosure relates to a catalyst including palladium and one or more metals selected from the group consisting of potassium, magnesium, and calcium, being supported on a zeolite-type molecular sieve.

Specifically, methane is a very stable substance and is difficult to process at low temperatures, so the removal of methane is done by using oxidation catalysts at high temperatures. For example, methane oxidation catalysts having noble metals supported thereon are effective for methane oxidation at high temperatures or high pressure. However, conventional methane oxidation catalysts are deactivated rapidly at high temperatures or high pressure, especially in gas mixture conditions where moisture (water vapor) coexists, thereby deteriorating the performance of the methane oxidation catalyst. Besides, due to low long-term stability, catalytic activity could not be guaranteed for the desired time. Accordingly, it is essential to improve the performance and functionality of catalysts and carrier material technologies.

To solve the problems, the researchers of the present disclosure confirmed that by causing one or more metals selected from the group consisting of potassium, magnesium, and calcium to be supported on a zeolite-type molecular sieve, an excellent catalytic activity could be maintained stably for a long time even at high-temperature environments with water vapor present. At the same time, the researchers confirmed that a catalyst could be prepared economically by adding inexpensive potassium, magnesium, and/or calcium and as a result lowering the content of expensive platinum group noble metals. That is how the present disclosure was completed.

The zeolite-type molecular sieve is a crystalline aluminum silicate mineral. The zeolite-type molecular sieve may include naturally produced zeolites, artificially synthesized zeolites, and silicoaluminophosphate (SAPO) substituted with metal and/or P in the skeletal structure, and metalloaluminophosphate (MeAPO). The zeolite-type molecular sieve may preferably be any one selected from the group consisting of beta zeolites, mordenites, MFI-type zeolites, ferrierites, and CHA-type zeolites.

The MFI-type zeolites may include, for example, at least one type selected from the group consisting of ZSM-5, [As-Si-O]-MFI, [Fe-Si-O]-MFI, [Ga-Si-O]-MFI, AMS-1B, AZ-1, Bor-C, boralite C, Encilite, FZ-1, LZ-105, mutinaite, NU-4, NU-5, silicalite, TS-1, TSZ, TSZ-III, TZ-01, USC-4, USI-108, ZBH, ZKQ-1B, ZMQ-TB, and organic free ZSM-5, and mixtures of two or more types thereof.

In addition, the CHA type zeolites may include, for example, at least one type selected from the group consisting of chabazite, AlP, [Al-As-O]-CHA, [Co-Al-P-O]-CHA, [Mg-Al-P-O]-CHA, [Si-O]-CHA, [Zn-Al-P-O]-CHA, [Zn-As-O]-CHA, |Co| [Be-P-O]-CHA, |Li-Na| [Al-Si-O]-CHAO34, CoAPO-44, CoAPO-47, DAF-5, dehydrated Na-Chabazite, GaPO-34, K-Chabazite, LZ-218, Linde D, Linde R, MeAPO-47, MeAPSO-47, Ni(deta)2-UT-6, Phi, SAPO-34, SAPO-47, SSZ-13, SSZ-62, UiO-21, willhendersonite, ZK-14, and ZYT-6, and mixtures of two or more types thereof.

In another preferred aspect of the present disclosure, the zeolite-type molecular sieve may include at least one type selected from the group consisting of SSZ-13, mordenite, ZSM-5, and SAPO-34.

Meanwhile, the zeolite-type molecular sieve may include at least one metal selected from the group consisting of potassium, magnesium, and calcium, the metal acting as a co-catalyst to further activate the methane oxidation reaction.

The one or more metals selected from the group consisting of potassium, magnesium, and calcium may be supported on the zeolite-type molecular sieve through ion exchange. The one or more metals selected from the group consisting of potassium, magnesium, and calcium for the ion exchange may be involved in the ion exchange with precursors thereof. Any water-soluble salt compound can be used as the precursors thereof, and for example, nitrate, carbonate, hydrochloride, sulfate, or hydrates thereof can be used. Herein, since the ion exchange is an already known technology, a detailed description thereof will be omitted.

At this time, the one or more metals selected from the group consisting of potassium, magnesium, and calcium is preferably contained in an amount of 0.01 wt% to 10 wt% based on the total weight of the catalyst.

In the present disclosure, by causing one or more metals selected from the group consisting of potassium, magnesium, and calcium to be supported on a zeolite-type molecular sieve through ion exchange, the metal can be distributed very evenly inside the zeolite-type molecular sieve.

The zeolite-type molecular sieve ion exchanged with the one or more metals selected from the group consisting of potassium, magnesium, and calcium can have palladium (Pd), a catalytically active ingredient, supported thereon. At this time, an impregnation method can be used for palladium to be supported on the zeolite-type molecular sieve.

Palladium being supported on the zeolite-type molecular sieve may be contained in an amount of 0.1 wt% to 10 wt%, preferably 0.5 wt% to 5 wt% based on the total weight of the catalyst. When the content of palladium is within the range, the most economical and highly active catalyst is obtained.

Yet another aspect of the present disclosure relates to a method of preparing a catalyst for methane oxidation reaction, the method including:
(a) causing one or more metals selected from the group consisting of potassium, magnesium, and calcium to be supported on a zeolite-type molecular sieve through ion exchange;
(b) washing, drying, and calcining the resulting product of the step (a);
(c) causing palladium to be supported on the resulting sintered product of the step (b) through wet impregnation; and
(d) drying and calcining the resulting product of the step (c) .

A method for preparing a catalyst for methane oxidation reaction according to an embodiment of the present disclosure includes causing one or more metals selected from the group consisting of potassium, magnesium, and calcium to be supported on a zeolite-type molecular sieve through an ion exchange method which enables fast reaction speed and the obtainment of uniform compounds and then impregnating palladium on the carrier using a wet impregnation method. This is to ensure long-term stable catalytic activity even at high temperatures where water vapor is present in the methane oxidation reaction. Thus, through the method, a catalyst for methane oxidation reaction can be prepared economically and easily.

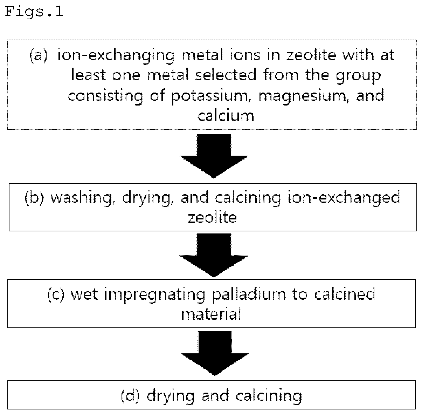

Hereinafter, a method of preparing a catalyst for methane oxidation reaction according to an embodiment of the present disclosure will be described. FIG. 1 is a process flow chart of a method for preparing a catalyst for methane oxidation reaction according to an embodiment of the present disclosure.

Referring to FIG. 1, the method of preparing a catalyst for methane oxidation reaction includes causing one or more metals selected from the group consisting of potassium, magnesium, and calcium to be supported on a zeolite-type molecular sieve through ion exchange [step (a)].

As mentioned above, the zeolite-type molecular sieve may include naturally produced zeolites, artificially synthesized zeolites, and silicoaluminophosphate (SAPO) substituted with metal and/or P in the skeletal structure, and metalloaluminophosphate (MeAPO). The zeolite-type molecular sieve may preferably be any one selected from the group consisting of beta zeolites, mordenites, MFI-type zeolites, ferrierites, and CHA-type zeolites.

In addition, to maintain excellent catalytic activity stably for a long time, the zeolite-type molecular sieve has at least one metal selected from the group consisting of potassium, magnesium, and calcium supported thereon through ion exchange. The ion exchange can be performed by contacting the zeolite with the precursors of the metals described above. The metal precursors may be any water-soluble salt compound. For example, nitrate, carbonate, hydrochloride, sulfate, or hydrates thereof may be used. Herein, since the ion exchange is an already known technology, a detailed description thereof will be omitted.

At this time, the one or more metals selected from the group consisting of potassium, magnesium, and calcium may be preferably contained as a whole in an amount of 0.01 wt% to 10 wt% based on the total weight of the catalyst when being supported on the zeolite-type molecular sieve.

In the present disclosure, by causing one or more metals selected from the group consisting of potassium, magnesium, and calcium to be supported on a zeolite-type molecular sieve through ion exchange, the metal can be distributed very evenly inside the zeolite-type molecular sieve.

Afterward, the supported zeolite-type molecular sieve through ion exchange with the one or more metals selected from the group consisting of potassium, magnesium, and calcium is washed, dried, and then calcined [step (b)].

The washing may be performed one or more times with distilled water or the like to remove unreacted substances and by-products present during the ion exchange process. The supported material washed may be dried at a temperature in a range of 80°C to 120°C for 1 hour to 24 hours and then fired at a temperature in a range of 200°C to 1,000°C for 1 hour to 12 hours.

The supported material obtained in this way has palladium in the carrier thereof through an initial wet impregnation method [step (c)].

The initial wet impregnation method is where a solution is prepared by dissolving palladium in an equal volume to the pore volume of zeolite into a solvent, the solution is added to dried zeolite for absorption, and then the solvent is removed by drying. The initial wet impregnation method has the advantage of being the simplest among the impregnation methods.

In the present disclosure, palladium can be supported on a zeolite-type molecular sieve using an initial wet impregnation method among impregnation methods to stably maintain excellent catalytic activity for a long time. Herein, since the initial wet impregnation method is an already known technology, a detailed description thereof will be omitted.

Palladium initially wet impregnated into a zeolite-type molecular sieve having the metal supported thereon may be contained in an amount of 0.1 wt% to 10 wt%, preferably 0.5 wt% to 5 wt% based on the total weight of the catalyst. When the content of palladium is within the range, the most economical and highly active catalyst is obtained.

The palladium-supported material is finally dried and calcined to prepare a catalyst for a methane oxidation reaction [step (d)].

The drying of the supported material can be performed at a temperature in a range of 80°C to 120°C for 1 hour to 24 hours, and the calcining of the supported material can be performed at a temperature in a range of 300°C to 600°C for 2 to 12 hours.

The method for preparing a catalyst for methane oxidation reaction according to the present disclosure is a wet impregnation method that can stably maintain excellent catalytic activity for a long time by supporting a zeolite-type molecular sieve prepared through an ion exchange method that enables fast reaction speed and the obtainment of uniform compounds. In the method, by preparing a catalyst for methane oxidation reaction, having palladium supported thereon, methane can be oxidated efficiently with the catalyst having stable, high catalytic activity not only in dry conditions without water vapor components but also at high temperatures exposed to large amounts of water vapor (moisture).

In yet another aspect, the present disclosure relates to a method of oxidating methane, the method causing complete oxidation of methane in the presence of the catalyst for the methane oxidation reaction in a gas mixture including methane, oxygen, and water vapor.

The catalyst for methane oxidation reaction according to the present disclosure can efficiently oxidate methane with stable and high catalytic activity even at high temperatures exposed to a large amount of water vapor (moisture). At this time, the water vapor may be contained in an amount of 20% by volume or less based on the total volume of the gas mixture.

The catalyst for a methane oxidation reaction according to the present disclosure can promote the removal of methane by oxidating methane from a gas mixture through a conventional method. At this time, the oxidation reaction of methane is preferably performed at a temperature in a range of 300°C to 600°C at normal pressure and a space velocity in a range of 1,000 cm3g-1h-1 to 200,000 cm3g-1h-1 to suppress deactivation of the catalyst at high temperatures.

In addition, the catalyst for methane oxidation reaction according to the present disclosure may have a methane conversion rate of 90% and more at an oxidation temperature in a range of 300°C to 500°C.

Hereinafter, the present disclosure will be described in more detail through specific examples. The following examples are merely examples to aid understanding of the present disclosure, and the scope of the present disclosure is not limited thereto.

### <Example 1>

1 g of SSZ-13 zeolite (ZS 113LH from Catalyst Holding, China) with a Si/Al molar ratio of 15 was added to 100 mL of 0.5 M KNOs. The zeolite was stirred at room temperature for 12 hours, and the zeolite was recovered using centrifugation. The zeolite was again added to 100 mL of 0.5 M KNO₃ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which potassium was ion-exchanged. 0.5 g of the potassium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_K/SSZ-13) as shown in Table 1.

### <Example 2>

1 g of SSZ-13 zeolite (ZS 113LH from Catalyst Holding, China) with a Si/Al molar ratio of 15 was added to 100 mL of 0.2 M Mg(NO₃)₂. The zeolite was stirred at room temperature for 12 hours, and the zeolite was recovered using centrifugation. The zeolite was again added to 100 mL of 0.2 M Mg(NOs)₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which magnesium was ion-exchanged. 0.5 g of the magnesium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Mg/SSZ-13) as shown in Table 1.

### <Example 3>

1 g of SSZ-13 zeolite (ZS 113LH from Catalyst Holding, China) with a Si/Al molar ratio of 15 was added to 100 mL of 0.2 M Ca(NO₃)₂. The zeolite was stirred at room temperature for 12 hours, and the zeolite was recovered using centrifugation. The zeolite was again added to 100 mL of 0.2 M Ca(NO₃)₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which calcium was ion-exchanged. 0.5 g of the calcium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Ca/SSZ-13) as shown in Table 1.

### <Example 4>

1 g of Mordenite zeolite (CBV 21A from Zeolyst) with a Si/Al molar ratio of 10 was added to 100 mL of 0.5 M KNOs. The zeolite was stirred at room temperature for 12 hours, and the zeolite was recovered using centrifugation. The zeolite was again added to 100 mL of 0.5 M KNO₃ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which potassium was ion-exchanged. 0.5 g of the potassium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_K/MOR) as shown in Table 1.

### <Example 5>

1 g of H-ZSM-5 zeolite (CBV 2314 from Zeolyst) with a Si/Al molar ratio of 11.5 was added to 100 mL of 0.5 M KNOs. The zeolite was stirred at room temperature for 12 hours, and the zeolite was recovered using centrifugation. The zeolite was again added to 100 mL of 0.5 M KNO₃ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which potassium was ion-exchanged. 0.5 g of the potassium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_K/ZSM-5) as shown in Table 1.

### <Example 6>

1 g of SAPO-34 zeolite (from Zeolyst) with a Si/Al molar ratio of 0.3 was added to 100 mL of 0.5 M KNOs. The zeolite was stirred at room temperature for 12 hours, and the zeolite was recovered using centrifugation. The zeolite was again added to 100 mL of 0.5 M KNO₃ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which potassium was ion-exchanged. 0.5 g of the potassium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_K/SAPO-34) as shown in Table 1.

### <Comparative Example 1>

0.5 g of SSZ-13 zeolite (ZS 113LH from Catalyst Holding, China) with a Si/Al molar ratio of 15 was added to 25 mL of 0.0185 M Pd(NO₃)₂. The zeolite was stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_H/SSZ-13) as shown in Table 1.

### <Comparative Example 2>

1 g of SSZ-13 zeolite (ZS 113LH from Catalyst Holding, China) with a Si/Al molar ratio of 15 was added to 100 mL of 0.5 M NaNOs. The zeolite was stirred at room temperature for 12 hours, and the zeolite was recovered using centrifugation. The zeolite was again added to 100 mL of 0.5 M NaNOs and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which sodium was ion-exchanged. 0.5 g of the sodium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Na/SSZ-13) as shown in Table 1.

### <Comparative Example 3>

1 g of SSZ-13 zeolite (ZS 113LH from Catalyst Holding, China) with a Si/Al molar ratio of 15 was added to 100 mL of 0.2 M Zn(NO₃)₂. The zeolite was stirred at room temperature for 12 hours, and the zeolite was recovered using centrifugation. The zeolite was again added to 100 mL of 0.2 M Zn(NOs)₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which zinc was ion-exchanged. 0.5 g of the zinc ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Zn/SSZ-13) as shown in Table 1.

### <Comparative Example 4>

1 g of SSZ-13 zeolite (ZS 113LH from Catalyst Holding, China) with a Si/Al molar ratio of 15 was added to 100 mL of 0.2 M Na₂WO₄. The zeolite was stirred at room temperature for 12 hours, and the zeolite was recovered using centrifugation. The zeolite was again added to 100 mL of 0.2 M Na₂WO₄ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which tungsten was ion-exchanged. 0.5 g of the tungsten ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_W/SSZ-13) as shown in Table 1.

### <Comparative Example 5>

1 g of SSZ-13 zeolite (ZS 113LH from Catalyst Holding, China) with a Si/Al molar ratio of 15 was added to 100 mL of 0.5 M LiNOs. The zeolite was stirred at room temperature for 12 hours, and the zeolite was recovered using centrifugation. The zeolite was again added to 100 mL of 0.5 M LiNOs and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which lithium was ion-exchanged. 0.5 g of the lithium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Li/SSZ-13) as shown in Table 1.

### <Comparative Example 6>

1 g of SSZ-13 zeolite (ZS 113LH from Catalyst Holding, China) with a Si/Al molar ratio of 15 was added to 100 mL of 0.2 M Cu(NO₃)₂. The zeolite was stirred at room temperature for 12 hours, and the zeolite was recovered using centrifugation. The zeolite was again added to 100 mL of 0.2 M Cu(NO₃)₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which copper was ion-exchanged. 0.5 g of the copper ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Cu/SSZ-13) as shown in Table 1.

### <Comparative Example 7>

1 g of SSZ-13 zeolite (ZS 113LH from Catalyst Holding, China) with a Si/Al molar ratio of 15 was added to 100 mL of 0.2 M Ce(NO₃)₂. The zeolite was stirred at room temperature for 12 hours, and the zeolite was recovered using centrifugation. The zeolite was again added to 100 mL of 0.2 M Ce(NO₃)₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which cerium was ion-exchanged. 0.5 g of the cerium ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Ce/SSZ-13) as shown in Table 1.

### <Comparative Example 8>

1 g of SSZ-13 zeolite (ZS 113LH from Catalyst Holding, China) with a Si/Al molar ratio of 15 was added to 100 mL of 0.2 M MoCl₂. The zeolite was stirred at room temperature for 12 hours, and the zeolite was recovered using centrifugation. The zeolite was again added to 100 mL of 0.2 M MoCl₂ and stirred at room temperature for 12 hours. Afterward, the recovered zeolite was washed with distilled water and then dried in an oven at a temperature of 100°C for 12 hours. The dried zeolite was heated to a temperature of 550°C at a speed of 5°C/min under air conditions and then fired at a temperature of 550°C for 4 hours to obtain zeolite in which molybdenum was ion-exchanged. 0.5 g of the molybdenum ion-exchanged zeolite obtained above was added to 25 mL of 0.0185 M Pd(NO₃)₂, stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_Mo/SSZ-13) as shown in Table 1.

### <Comparative Example 9>

0.5 g of Al2O3 (Aluminum oxide from Sigma-Aldrich), 0.11 g of Pd(NO₃)₂, and 0.88 g of KNO3 were simultaneously added to 25 mL of distilled water. The mixture was stirred at room temperature for 6 hours, and then water was evaporated by vacuum distillation. Afterward, the mixture was dried in an oven at a temperature of 100°C for 2 hours, and then the dried palladium-supported aluminum oxide was heated to a temperature of 400°C at 5°C/min under air conditions and then fired at a temperature of 400°C for 4 hours to prepare a catalyst for methane oxidation reaction (Pd_K/Al2O3) as shown in Table 1.

### <Comparative Example 10>

0.5 g of Mordenite zeolite (CBV 21A from Zeolyst) with a Si/Al molar ratio of 10 was added to 25 mL of 0.0185 M Pd(NO₃)₂. The zeolite was stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_H/SSZ-13) as shown in Table 1.

### <Comparative Example 11>

0.5 g of H-ZSM-5 zeolite (CBV 2314 from Zeolyst) with a Si/Al molar ratio of 11.5 was added to 25 mL of 0.0185 M Pd(NO₃)₂. The zeolite was stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_H/SSZ-13) as shown in Table 1.

### <Comparative Example 12>

0.5 g of SAPO-34 zeolite (from Zeolyst) with a Si/Al molar ratio of 0.3 was added to 25 mL of 0.0185 M Pd (NO₃)₂. The zeolite was stirred at room temperature for 6 hours, and then water was evaporated by vacuum distillation. Afterward, the zeolite was dried in an oven at a temperature of 100°C for 2 hours, and then the dried palladium-supported zeolite was heated to a temperature of 400°C at 5°C/min under air conditions and then fired at a temperature of 400°C for 4 hours to prepare a catalyst for methane oxidation reaction (Pd_H/SSZ-13) as shown in Table 1.

### <Comparative Example 13>

0.5 g of SSZ-13 zeolite (ZS 113LH from Catalyst Holding, China) with a Si/Al molar ratio of 15, 0.11 g of Pd(NO₃)₂, and 0.023 g of KNO₃ was simultaneously added to 25 mL of distilled water. The mixture was stirred at room temperature for 6 hours, and then water was evaporated by vacuum distillation. Afterward, the mixture was dried in an oven at a temperature of 100°C for 2 hours, and then the dried palladium/metal ion-supported zeolite was heated to a temperature of 400°C at 5°C/min under air conditions and then fired at a temperature of 400°C for 4 hours to prepare a catalyst for methane oxidation reaction (Pd_K_SSZ-13) as shown in Table 1.

### <Comparative Example 14>

0.5 g of SSZ-13 zeolite (ZS 113LH from Catalyst Holding, China) with a Si/Al molar ratio of 15, 0.11 g of Pd(NO₃)₂, and 0.8 mL of 0.01M Mg(NO₃)₂·6H₂O solution was simultaneously added to 25 mL of distilled water. The mixture was stirred at room temperature for 6 hours, and then water was evaporated by vacuum distillation. Afterward, the mixture was dried in an oven at a temperature of 100°C for 2 hours, and then the dried palladium/metal ion-supported zeolite was heated to a temperature of 400°C at 5°C/min under air conditions and then fired at a temperature of 400°C for 4 hours to prepare a catalyst for methane oxidation reaction (Pd_Mg_SSZ-13) as shown in Table 1.

**[Table 1]**

| Division | Carriers | Metals | | | Palladium | |
|---|---|---|---|---|---|---|
| | | Metal type | Supported amount (wt%) | Supporting method | Supported amount (wt%) | Supporting method |
| Example 1 | SSZ-13 | K | 1.76 | Ion exchange | 4. | Wet impregnation |
| Example 2 | SSZ-13 | Mg | 0.03 | Ion exchange | 4 | Wet impregnation |
| Example 3 | SSZ-13 | Ca | 0.32 | Ion exchange | 4 | Wet impregnation |
| Example 4 | mordenite | K | 1.98 | Ion exchange | 4 | Wet impregnation |
| Example 5 | ZSM-5 | K | 1.49 | Ion exchange | 4 | Wet impregnation |
| Example 6 | SAPO-34 | K | 2.10 | Ion exchange | 4 | Wet impregnation |
| Comparative Example 1 | SSZ-13 | - | - | - | 4. | Wet impregnation |
| Comparative Example 2 | SSZ-13 | Na | 1.36 | Ion exchange | 4 | Wet impregnation |
| Comparative Example 3 | SSZ-13 | Zn | 0.45 | Ion exchange | 4 | Wet impregnation |
| Comparative Example 4 | SSZ-13 | W | 0.14 | Ion exchange | 4 | Wet impregnation |
| Comparative Example 5 | SSZ-13 | Li | 0.31 | Ion exchange | 4 | Wet impregnation |
| Comparative Example 6 | SSZ-13 | Cu | 1.51 | Ion exchange | 4 | Wet impregnation |
| Comparative Example 7 | SSZ-13 | Ce | 6.51 | Ion exchange | 4 | Wet impregnation |
| Comparative Example 8 | SSZ-13 | Mo | 0.47 | Ion exchange | 4 | Wet impregnation |
| Comparative Example 9 | Al2O3 | K | 1.76 | Ion exchange | 4 | Wet impregnation |
| Comparative Example 10 | mordenite | - | - | - | 4 | Wet impregnation |
| Comparative Example 11 | ZSM-5 | - | - | - | 4 | Wet impregnation |
| Comparative Example 12 | SAPO-34 | - | - | - | 4 | Wet impregnation |
| Comparative Example 13 | SSZ-13 | K | 1.76 | Wet impregnation | 4 | Wet impregnation |
| Comparative Example 14 | SSZ-13 | Mg | 0.04 | Wet impregnation | 4 | Wet impregnation |

### <Experiment Example 1: Methane removal efficiency measurements>

0.1 g of each catalyst prepared in the examples and comparative examples was charged into a reactor (outer diameter 0.7 cm, length 34 cm) . A gas mixture including methane, oxygen, and water vapor mixed at a molar ratio of 0.5:5:5 in the presence of an inert gas (N₂ 89.5%) was supplied to the reactor at a space velocity (GHSV) of 120,000 cm³/g/h. A methane oxidation reaction was performed at temperatures from 300°C to 500°C for 60 minutes at 50°C temperature intervals, and the results are shown in Table 2 below and FIG. 1. At this time, T₅₀ and T₉₀ in Table 2 and FIG. 1 represent the temperatures when the methane conversion rate reaches 50% and 90%, respectively.

**[Table 2]**

| Division | Methane conversion rate (%) | | | | T₅₀ (°C) | T₉₀ (°C) |
|---|---|---|---|---|---|---|
| | 350°C | 400°C | 450°C | 500°C | | |
| Example 1 | 39.7 | 79.3 | 89.1 | 87.3 | 363 | 450 |
| Example 2 | 28.2 | 83.6 | 96.1 | 99.0 | 370 | 426 |
| Example 3 | 29.1 | 76.5 | 93.6 | 97.9 | 372 | 439 |
| Example 4 | 56.6 | 96.9 | 99.7 | 99.9 | 342 | 391 |
| Example 5 | 42.4 | 88.7 | 96.6 | 98.6 | 358 | 406 |
| Example 6 | 45.9 | 94.8 | 99.5 | 99.9 | 354 | 395 |
| Comparative Example 1 | 22.7 | 81.1 | 97.9 | 96.2 | 373 | 426 |
| Comparative Example 2 | 23.8 | 73.3 | 91.7 | 89.6 | 376 | 445 |
| Comparative Example 3 | 18.5 | 50.2 | 84.6 | 94.1 | 400 | 478 |
| Comparative Example 4 | 53.5 | 87.0 | 94.7 | 96.8 | 346 | 419 |
| Comparative Example 5 | 33.6 | 69.8 | 86.1 | 93.4 | 373 | 477 |
| Comparative Example 6 | 9.0 | 28.7 | 55.0 | 82.1 | 440 | - |
| Comparative Example 7 | 1.1 | 4.5 | 19.5 | 75.3 | 477 | - |
| Comparative Example 8 | 0.4 | 2.3 | 9.1 | 25.3 | - | - |
| Comparative Example 9 | 16.6 | 64.6 | 89.1 | 94.9 | 385 | 458 |
| Comparative Example 10 | 21.5 | 55.9 | 71.0 | 78.6 | 391 | - |
| Comparative Example 11 | 19.7 | 60.6 | 87.4 | 96.3 | 387 | 464 |
| Comparative Example 12 | 33.9 | 79.8 | 97.4 | 99.6 | 368 | 429 |
| Comparative Example 13 | 26.7 | 57.1 | 79.3 | 80.9 | 388 | - |
| Comparative Example 14 | 15.8 | 61.6 | 85.9 | 95.0 | 387 | 472 |

### <Experiment Example 2: Determination of long-term stability of catalysts>

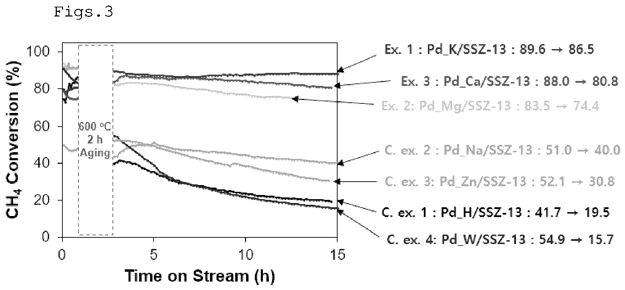

0.1 g of each catalyst prepared in the above examples and comparative examples was charged into a reactor (outer diameter 0.7 cm, length 34 cm). A gas mixture of inert gas (He 89.5%) and water vapor at a molar ratio of 95:5 was supplied to the reactor at a space velocity (GHSV) of 60,000 cm³/g/h. A catalyst deactivation (aging) process was performed at a temperature of 600°C for 120 minutes. Afterward, a gas mixture including methane, oxygen, and water vapor at a molar ratio of 0.5:5:5 in the presence of an inert gas was supplied to the reactor at a space velocity (GHSV) of 120,000 cm³/g/h. A methane oxidation reaction was performed at a temperature of 400°C for 15 hours, and the results are shown in FIG. 3.

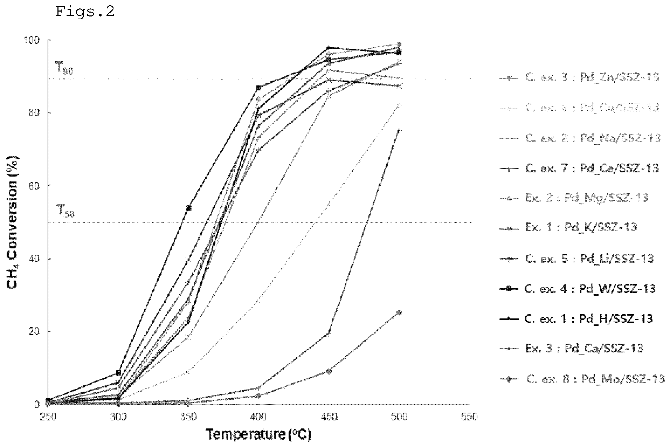

Examples 1 to 6 and Comparative Examples 1 to 8 and 10 to 12 are intended to examine the effect of changing the type of metal. As shown in Table 2 and FIGs. 1 and 2, when K, Mg, and Ca according to the present disclosure are subject to ion exchange and Pd is subject to being supported, the reactivity to methane oxidation reaction is high, and the catalyst has high long-term stability with no decrease in activity even after long-term use of the catalyst.

In addition, Comparative Example 9 is intended to prepare for the case where the zeolite-type molecular sieve according to the present disclosure is not used. In Comparative Example 9, the same amount of metal catalyst was supported as in Example 1, but the carrier thereof was changed to alumina. In this case, methane oxidation activity was found to be low compared to Example 1, and in particular, looking at FIG. 3, long-term stability was also low.

Comparative Examples 13 and 14 are intended to prepare for the case where the catalyst was prepared without following the preparation method of the present disclosure. K or Mg and Pd were supported on SSZ-13, but instead of having K and Mg to be supported on SSZ-13 through ion exchange first and then Pd, Pd, and K or Mg being simultaneously supported on SSZ-13 by impregnation. In the case of simultaneous impregnation like this, methane oxidation activity was significantly lower compared to Examples 1 and 2.

Any simple modification or change of the present disclosure can be easily implemented by those skilled in the art, and all such modifications or changes can be considered to be included in the scope of the present disclosure.

## Claims

1. A catalyst for a methane oxidation reaction, the catalyst comprising palladium and one or more metals selected from the group consisting of potassium, magnesium, and calcium, being supported on a zeolite-type molecular sieve.

2. The catalyst of claim 1, wherein the one or more metals selected from the group consisting of potassium, magnesium, and calcium is contained as a whole in an amount of 0.01 wt% to 10 wt% based on the total weight of the catalyst.

3. The catalyst of claim 1, wherein the palladium is contained in an amount of 0.1 wt% to 10 wt% based on the total weight of the catalyst.

4. The catalyst of claim 1, wherein the zeolite-type molecular sieve is selected from the group consisting of SSZ-13, mordenite, ZSM-5, and SAPO-34.

5. A method of preparing a catalyst for a methane oxidation reaction, the method comprising:
(a) causing one or more metals selected from the group consisting of potassium, magnesium, and calcium to be supported on a zeolite-type molecular sieve through ion exchange;
(b) washing, drying, and calcining the resulting product of the step (a);
(c) causing palladium to be supported on the resulting sintered product of the step (b) through wet impregnation; and
(d) drying and calcining the resulting product of the step (c) .

6. The method of claim 5, wherein the one or more metals selected from the group consisting of potassium, magnesium, and calcium are contained as a whole in an amount of 0.01 wt% to 10 wt% based on the total weight of the catalyst.

7. The method of claim 5, wherein the palladium is contained in an amount of 0.1 wt% to 10 wt% based on the total weight of the catalyst.

8. The method of claim 5, wherein the zeolite-type molecular sieve is selected from the group consisting of SSZ-13, mordenite, ZSM-5, and SAPO-34.

9. The method of claim 5, wherein the calcining of the step (b) is performed at a temperature in a range of 200°C to 1000°C.

10. The method of claim 5, wherein the calcining of the step (d) is performed at a temperature in a range of 300°C to 600°C.

11. A methane oxidation method that causes complete oxidation of methane in the presence of the catalyst of any one of claims 1 to 4.

12. The method of claim 11, wherein the oxidation is performed at a temperature in a range of 300°C to 600°C.

13. The method of claim 11, the methane is introduced into the methane oxidation reactor in the form of a gas mixture including the methane, oxygen, and water vapor.
